# EUROPEAN PATENT APPLICATION

(11) **EP 4 760 786 A1**
(43) Date of publication of application: **17.06.2026**
(21) Application number: 24219905.7
(22) Date of filing: 13.12.2024
(51) Int. Cl.: H01M 4/04, H01M 4/131, H01M 4/1391, H01M 4/525, H01M 10/0525, H01M 10/0562, H01M 10/0585

(54) **METHOD OF MANUFACTURING A THIN-FILM SOLID STATE BATTERY USING DIRECT CURRENT SPUTTERING**

(71) Applicant: EMPA Eidgenössische Materialprüfungs- und Forschungsanstalt, 8600 Dübendorf (CH); BTRY AG, 8600 Dübendorf (CH)
(72) Inventor: ARIBIA, Abdessalem, 8600 Dübendorf (CH); LUENGO, Miguel Rico, 8600 Dübendorf (CH); FUTSCHER, Moritz, 8600 Dübendorf (CH); OLARIU, Tudor, 8600 Dübendorf (CH)
(74) Representative: Eisenführ Speiser

(57) **Abstract**

A method of manufacturing a cathode for a thin-film solid state battery, a method of manufacturing a thin-film arrangement comprising an electrolyte layer and a method of manufacturing a thin-film solid state battery are disclosed, wherein one or more of the layers in these arrangement are deposited using direct current, DC, sputtering processes. Further, a corresponding solid state battery is disclosed.

## Description

The present invention relates to a method of manufacturing a cathode and a method of manufacturing a thin-film arrangement. Further, the present invention relates to a method of manufacturing a thin-film solid state battery including the thin-film arrangement and the cathode and a corresponding thin-film solid state battery.

In the past years, the rise of the Internet of Things and the general utilization of technology in everyday chores has increased the demand of efficient energy storage technologies that are safe to use and, if possible, provide for clean and sustainable power sources. One energy storage technology meeting these demands are thin-film solid state batteries, specifically lithium-based thin-film solid state batteries which utilize solid electrolytes. These kind of batteries are known to be less flammable than conventional lithium ion batteries and, potentially, provide for higher energy densities.

Lithium-based thin-film solid state batteries may be manufactured using lithium metal layers that are deposited using physical vapor deposition (PVD). However, due to its tendency to form a passivating surface film, manufacturing processes involving lithium metal require an argon atmosphere (which avoids high interfacial resistance) to render sufficient results. Alternatively, it may also be sufficient to use a vacuum chamber or a dry room for the manufacturing process, as long as any exposition to carbon dioxide and/or water may be avoided, such as to maintain the integrity of the layers. However, manufacturing in such atmospheres is complicated and expensive and, therefore, difficult to use in a commercial context.

Accordingly, in order to commercialize the manufacturing of thin-film solid state batteries, these complicated processes need to be foregone.

One known way to do so is to manufacture the thin-film solid state battery anode-free, i.e. to remove the anode from the manufacturing process. However, even when doing so, further challenges remain. As an example, the non-uniform growth of lithium metal at the interface between the solid electrolyte and a current collector of the solid state battery is a major issue, in particular in cases where multiple cells are used in a thin-film solid state battery. This aspect is addressed by international patent application WO 2023/247206 A1 of the present inventors. The application teaches a multi-cell monolithic thin-film battery that is anode-free and a corresponding fabrication method of such a battery which includes the layer-wise deposition of the individual thin films and the deposition of multiple cells on one another.

Another challenge resides in the manufacturing process for the electrolyte and the cathode of a thin-film solid state battery, specifically a multi-cell thin-film solid state battery. In order to provide such multi-cell thin-film solid state battery, multiple cells have to be stacked upon one another. This may be achieved by depositing the individual layers on top of one another, i.e. by depositing a first cell on a substrate layer-by-layer and then depositing a second cell on the first cells in a layer-by-layer manner.

Such a layer-wise deposition of different materials may be achieved using so-called sputtering, which is a specific way of performing PVD. Hereby, due to their low electrical conductivity, ceramic materials such as the electrolyte and the cathode of a thin-film solid state battery have to typically be sputtered using a specific sputtering technique called radio frequency (RF) sputtering. RF sputtering is complex and expensive as it requires a high frequency alternating field and a high frequency voltage source and has a relatively low deposition rate. Its usability for a commercial manufacturing process is therefore limited.

A process to perform layer-wise deposition of the materials that would overcome the above-cited drawbacks is the so-called direct current (DC) sputtering technique. The DC sputtering technique utilizes a direct current of several hundred Volts between target and substrate and, thus, requires a much less complex circuit. However, due to the nature of the DC sputtering process, it is generally not applicable for materials having a low electrical conductivity. This makes DC sputtering unsuitable for the cathode and/or the electrolyte of a thin-film solid state battery. As this technique, however, is more straightforward than RF sputtering, and, hence, would be more beneficial in commercial manufacturing processes, attempts have been made to allow performing DC sputtering also for materials having a low electrical conductivity.

Some advancements have been made with respect to thin-film electrolytes - which may, amongst others, also be used in thin-film solid state batteries. In that respect, US 9,334,557 B2 proposes alternative sputter target compositions for thin-film electrolytes which provides for a sufficient electrical conductivity to allow using DC sputtering for layer deposition.

Similarly, US 11,081,325 B1 is directed to a conductive target material that is suitable for the deposition of lithium ion electrolyte layers using DC sputtering for, amongst others, thin-film batteries. In this context, it is indicated that lithium phosphate (Li₃PO₄) has been found to be particularly advantageous for use to obtain a conductive target material for this purpose.

However, while some attempts exist to allow DC sputtering of electrolyte materials, no such solution has thus far been found for the cathode material.

As discussed in publication "Unlocking Stable Multi-Electron Cycling in NMC811 Thin-Films between 1.5-4.7 V" by the present inventors, one promising cathode material for high performance lithium-based solid state batteries is LiNi_{0.8}Mn_{0.1}Co_{0.1}O₂ (NMC811). For this material, deposition using any kind of sputtering has thus far proven impossible. The publication discusses a possibility for depositing the material using RF sputtering. However, an approach to deposit this cathode material - or any other cathode materials - using DC sputtering has not been proposed, thereby preventing a meaningful commercialization of lithium-based multi-cell solid state batteries including these kinds of materials.

It is therefore an object of the present invention to resolve the above issues. More particularly, it is an object of the present invention to reduce the complexity and improve the deposition rate in the PVD of layers of a solid state battery, in particular the cathode layer as well as the electrolyte layer of the solid state battery.

This objective is achieved by a method of manufacturing a layer for a thin-film solid state battery, such as a cathode for a thin-film solid state battery which comprises the step of depositing a cathode material, preferably a lithium-enriched cathode material, on a substrate using a sputtering process to provide a cathode layer. Preferentially, this sputtering process corresponds to a direct current, DC, sputtering process.

When, in the following, reference is made to the cathode layer, the same teaching is applicable to any other layer of the thin-film solid state battery which may also be different from the cathode layer and essentially could be any layer comprising a crystal structure.

It shall be understood that the thin-film solid state battery is not necessarily a thin-film battery, but in one or more embodiments may be a "solid state battery" or a "battery".

In this context, the term thin-film solid state battery shall be understood as referring to a battery having a battery cell that is made up of a thin-film arrangement. More particularly, it corresponds to a battery in which the active components forming the battery cell, such as the cathode, the electrolyte and/or the anode and/or the cathode current collector and/or anode current collector are deposited as thin films, which thickness typically ranges between a few nanometer to several micrometer, depending on the requirements, material and manufacturing technique.

The term substrate may hereby particularly refer to a foil on which the different layers of the battery cell are deposited. In some embodiments, the foil may be made from a plastic material with a thin film made of a transition metal, preferably a material such as titanium or platinum, deposited thereon. In some embodiments, a polymer-based substrate may alternatively or additionally be used.

The term cathode layer may refer to the layer acting as a cathode, i.e. the layer in which the electrochemical reactions occur during battery operation. The cathode layer is typically composed of a lithium-containing material, such as LiNi_{0.8}Mn_{0.1}Co_{0.1}O₂. The cathode layer is used to store lithium ions during the manufacturing process and/or the charging process. As such, the cathode layer governs the energy density, the capacity and the cycling stability of the corresponding thin-film solid state battery. In order to achieve proper performance, the cathode layer has to be crystalized. While it is, in principle, possible to deposit the thin-film already as a crystalized layer, this has proven to be very complicated. Thus, usually, the cathode layer is first formed by deposition and is subsequently crystalized using an annealing process as described elsewhere in this application.

Further, the term electrolyte layer may particularly refer to a layer made from a material that facilitates the conduction of lithium ions between the cathode and anode while preventing electron flow, thereby controlling energy release. The electrolyte layer may particularly made from a compound containing lithium, phosphorus and oxygen, such as LiPON.

In accordance with the present invention, thin-film solid state batteries may typically be manufactured using thin-film deposition methods.

One such deposition method is direct current (DC) sputtering. In this context, the term DC sputtering shall be understood according to its conventional manner, i.e. as a sputtering method utilizing a direct current of several hundred Volts between a target containing the material to be deposited and a substrate on which the material is deposited in a vacuum chamber filled with a gas, such as argon or a gas mixture.

In accordance with the invention, the DC sputtering technique may particularly be used to manufacture a cathode layer on a substrate, which, in some embodiments, may particularly be a metal foil or a plastic foil.

In order to achieve this manufacturing of the cathode layer using DC sputtering, the cathode layer according to the invention may be made from a lithium-enriched cathode material. In this context, the term lithium-enriched refers to a material which has gone through a process of increasing the lithium content of the cathode material beyond its typical stoichiometric composition. In some embodiments, a lithium-enriched cathode material may have gone from a stoichiometric composition of e.g. Li₁CoO₂ to a composition of Li₂CoOₓ.

The concept of enriching the cathode material with lithium is based, on the one hand, on the realization that this enables DC sputtering to be used to begin with. On the other hand, it is also based on the realization that lithium has a tendency to evaporate during sputtering processes. In particular, the concept is based on the realization that the lithium loss occurring during the sputtering process has to be compensated in order to avoid lithium deficient films. Now, using a lithium-enriched cathode material ensures that the achieved cathode layer still has sufficient lithium, even if such loss of lithium occurs during the sputtering process due to evaporation or due to a re-sputtering of the material. This surplus of lithium allows to maintain the desired stoichiometry for optimal electrochemical performance.

In some embodiments, the cathode layer may be annealed upon deposition, such as to crystalize the material. The corresponding crystal structure may have a (003) orientation or a (101) orientation and/or a (104) orientation. A (003) orientation may be achieved using furnace annealing. A (101) and/or (104) orientation may be achieved by using a targeted annealing process with a flash lamp as described further below. A (104) and/or a (101) orientation are particularly beneficial as they provide for an alignment of the crystal lattice in a way that allows the lithium ions to be transported through the layer along a direction perpendicular to the layer plane, i.e. in parallel to the layer surface, whereas, in the (003) orientation, the transport of the lithium ions occurs in a plane perpendicular to the substrate. The movement in a plane perpendicular to the layer as achieved by the (104) and/or (101) orientation enhances the efficiency of the lithium ion transport, thereby leading to improved charging and discharging rates and better overall performance of the thin-film solid state battery.

According to an embodiment, the method may further comprise enriching a cathode material with a lithium-based enriching component to provide the lithium-enriched cathode material. More specifically, the method may comprise enriching an existing conventional cathode material with a lithium-based enriching component to provide the lithium-enriched cathode material before deposition. That is, the method may comprise providing a base cathode material, such as a lithium-containing base cathode material, and mixing it with a lithium-containing compound as lithium-based enriching component. As such, in accordance with this disclosure, a special target to be used for the DC sputtering process is provided.

When mixing the base cathode material with the lithium-based enriching component, the amount of lithium provided through the lithium-based enriching component may be determined such as to allow for compensation of any loss that may occur during the sputtering process. Hereby, it may be beneficial if the base cathode material and the lithium-based enriching component are homogeneously mixed. In order to enhance said homogeneity, the mixture of the base cathode material with the lithium-based enriching component may be subjected to a solid state reaction by heating it at temperatures ranging from 600°C to 900°C in an inert or reducing atmosphere. This step allows to obtain a lithium-enriched cathode material having uniform lithium distribution throughout. The lithium-enriched cathode material may particularly correspond to a powder. This powder-like lithium-enriched cathode material may be subjected to high pressure to press it into a sputtering target.

As an alternative also foreseen by the present inventors, the lithium enriched cathode material may be achieved by a co-sputtering process, in which a lithium target as lithium-based enriching component is sputtered simultaneously with a base cathode material target such as to be concurrently deposited on a substrate. Such simultaneous co-sputtering results in the deposition of both materials at the same time and ensuring the lithium is evenly incorporated within the cathode film.

In this case the lithium-enrichment is achieved during the deposition of the film. Said deposition may hereby preferably performed using RF sputtering.

In some embodiments, the lithium-based enriching component may particularly comprise lithium oxide (Li₂O). In some embodiments, the lithium could also be provided as a lithium metal and undergo oxidation only when provided in the target. Alternatively, the lithium-based enriching component may also comprise one of lithium carbonate (Li₂CO₃), lithium nitrate (LiNO₃), lithium nitride (Li₃N), lithium peroxide (Li₂O₂), lithium phosphorus oxide (Li₃PO₃), lithium imide (Li₂NH) or lithium amide (LiNH₂). Potentially, the lithium-based enriching component may comprise lithium fluoride (LiF) or lithium chloride (LiCI).

In some embodiments, the DC sputtering process may comprise a pulsed DC sputtering process.

The term pulsed DC sputtering refers to a variation of the standard DC sputtering process in which the DC voltage that is used for sputtering is periodically switched on and off or reversed in polarity at high frequencies, typically in the range of 10 kHz to 350 kHz, often in the range of 10 kHz to 100 kHz. That is, instead of applying a continuous DC current, the voltage is pulsed at regular intervals. During the phase where the voltage is switched on, ionized gas particles impact on the target material and cause an ejection of the material for deposition. When the voltage is switched off, any accumulated charge on the target dissipates.

As such, using pulsed DC sputtering has the benefit of reducing arcing compared to non-pulsed DC as described herein above. This is the case since, during the phases where the voltage is switched off, the charge may dissipate prior to the next pulse being applied. This allows performing the DC sputtering without having to worry about the charge accumulation, as there is a "naturally" provided time for the charge to dissipate. Furthermore, a pulsed DC sputtering process achieves a higher smoothness in the films compared to a standard (continuous) DC sputtering process. This is the case since the modulation of the current as used for pulsed DC sputtering increases plasma stability. Furthermore, the duty cycle - i.e. the cycle during which the direct current is switched on - is an important factor for adhesion of the film, whereby, in case of pulsed DC sputtering, said duty cycle allows for an improved adhesion compared to continuous DC sputtering. Insofar, arcing may be greatly decreased or even eliminated using a DC sputtering with a frequency in the range between 10 kHz to 350 kHz, preferably between 10 kHz and 100 kHz with a duty cycle in the range between 50% to 90%.Finally, the benefit of using a pulsed DC sputtering process is that commercial, already existing deposition systems may be used, such as those that are used for large scale glass coatings or for thin-film solar cells.

All in all, the pulsed DC sputtering process has the advantage that it is faster than an RF sputtering process, although it is a little slower than standard DC sputtering (but renders superior results).

When performing pulsed DC sputtering, compared to standard DC sputtering, further parameters need to be determined, such as the frequency of the pulse and the duty cycle of the sputtering. Hereby, the deposition result may be optimized by optimizing these parameters, along with the typical parameters for DC sputtering such as gas flow, power and the like. Insofar, a frequency between 10 kHz and 100 kHz may be used, such as a frequency of 10 kHz, 20 kHz, 30 kHz, 40 kHz, 50 kHz, 60 kHz, 70 kHz, 80 kHz, 90 kHz or 100 kHz or any value in between, depending on the desired thickness of the respective film and the material to be used. Corresponding duty cycles may be in the range between 20% to 90%, more preferably between 50% and 90%, even more preferably 50%, 60%, 70%, 80% or 90% or any value in between.

In an embodiment, the cathode material may comprise at least one of nickel or cobalt or manganese, aluminum or vanadium. These substances are beneficial for the specific properties of the cathode. As an example, the use of nickel improves properties, such as capacity, voltage - and, as such, the energy density, the degree of delithiation possible as well as the crystal structure transitions and crystal structure stabilization. On the other hand, cobalt may be used to reduce irreversible energy loss and increase the lithium mobility, such as to improve the properties of the batteries. Further, manganese may allow for the incorporation and retention of additional Lithium. Further, it may influence the chemical stability of the compound.

A publication by Yi et al., Delineating the Roles of Mn, Al, and Co by Comparing Three Layered Oxide Cathodes with the Same Nickel Content of 70% for Lithium-Ion Batteries, Chemistry of Materials, Vol. 34 (2), January 2022, discusses the benefits of different materials for use as a cathode.

In some embodiments, the cathode layer may comprise LiNi_{0.8}Mn_{0.1}Co_{0.1}O₂. In some embodiments of the method the lithium-enriched cathode material may comprise LiₓNi_{0.8}Mn_{0.1}Co_{0.1}O₂. This material may be achieved by using LiNi_{0.8}Mn_{0.1}C_{0.1}O₂ (NMC811) as a cathode material and mixing it with a lithium-based enriching component, such as lithium oxide (Li₂O) or lithium carbonate (Li₂CO₃). This may particularly enhance the lithium-content of NMC811, such as to have a stoichiometric composition including more lithium that prior to the enriching process. The enriching process may be performed as described herein above, achieving the benefits as likewise described herein above.

In some embodiments, the cathode layer may have a thickness between 10 nanometer to 100 micrometer, preferably between 0.1 micrometer up to and including 10 micrometer. The specific choice in thickness of cathode layer is based on the realization that the optimal thickness has to be selected as a compromise between the benefits of thinner layers versus the benefits of thicker layers. On the one hand, thinner cathode layers generally allow to provide batteries which may be charged and discharged very quickly. Additionally, the thinner the layer, the faster the battery can be manufactured, as manufacturing speed scales linearly with thickness, due to the deposition taking longer the thicker the layer has to be.

On the other hand, the capacity of the cathode layer scales linearly with its thickness as well. That is, the thicker the cathode layer, the higher is its capacity. Further, thicker layers generally provide for a higher sheet resistance which is a measure of how quickly charger carriers can be transported laterally. As such, a certain minimum thickness is necessary to achieve the necessary capacity and sheet resistance. However, in view of the benefits of thinner layers, such as faster charging, the thickness should not be overdone, in particular also because the thicker a layer the more mechanical stress it will exert on underlying layers. In view of the above, the selected thickness between 10 nanometer and 100 micrometer and, more specifically, between 0.1 micrometer and 10 micrometer, achieves just the right balance between capacity and energy density on the one hand and charging and manufacturing time on the other. In some embodiments, a thickness of 10 micrometer has been found as being particularly beneficial.

The invention also relates to a method of manufacturing a thin-film arrangement for a thin-film solid state battery which comprises: depositing a lithium-containing electrolyte material on a substrate or on a cathode layer using a direct current, DC, sputtering process to form an electrolyte layer; and depositing an electrically conductive material on the electrolyte layer using the DC sputtering process to form an electrically conductive layer.

In a further aspect, the present invention relates to a method of manufacturing an arrangement including thin-films that may be used in a solid state battery, preferably on to the cathode layer as previously described. This thin-film arrangement is manufactured by depositing a lithium-containing electrolyte material on a substrate or on a cathode layer with a DC sputtering method, preferably a pulsed DC sputtering method. This deposition may be used to form an electrolyte layer.

The material for the electrolyte layer is preferably chosen such that the electrolyte layer has a high ionic conductivity, such as to ensure the flow of lithium therethrough on the one hand. On the other hand, the material should be chosen such that the electrolyte layer may be capable act as electronic insulators, such as to force the electron flow in the circuit. Further, it is beneficial if the material is chosen such that the resulting electrolyte layer is stable or forms stable interphases against the neighboring materials, such as to improve the integrity of the thin-film solid state battery.

In a further step, an electrically conductive material may be deposited on the electrolyte layer using DC sputtering, and, in some embodiments, pulsed DC sputtering. The electrically conductive material may particularly be arranged to block lithium, i.e. to prevent lithium from propagating there through. The electrically conductive material may be used to form an electrically conductive layer. The electrically conductive layer may be made of any kind of electrically conductive material allowing to achieve a conductivity of >10⁵ S/m upon having been deposited. For that purpose, materials like copper, silver or titanium may be beneficial. As an alternative, a carbon-based material may be uses, such as amorphous carbon, graphene or nanotubes. Further alternative materials achieving the above-designated conductivity may also be used.

In some embodiments of this method, the DC sputtering process may comprise a pulsed DC sputtering process. It is noted that the benefits of a pulsed DC sputtering process as outlined with respect to the cathode layer also applies to the further layers of the thin-film solid state battery.

In some embodiments, the lithium-containing electrolyte material may comprise a lithium oxide. In some embodiments, the lithium-containing electrolyte material may also comprise one of lithium carbonate (Li₂CO₃), lithium nitrate (LiNO₃), lithium nitride (Li₃N), lithium peroxide (Li₂O₂), lithium phosphorus oxide (Li₃PO₃), lithium imide (Li₂NH) or lithium amide (LiNH₂). Potentially, the lithium-based enriching component may comprise lithium fluoride (LiF) or lithium chloride (LiCI).

Furthermore, in some embodiments of the method the electrically conductive material may comprise copper, silver, titanium or carbon. In some embodiments, the lithium containing electrolyte layer has a thickness between 0.1 micrometer and 5 micrometer, preferably between 0.5 micrometer and 2 micrometer. In some embodiments, the electrically conductive layer may have a thickness between 0.01 micrometer and 10 micrometer, preferably between 0.1 micrometer and 1 micrometer. Such a thickness would be particularly beneficial with respect to the conductivity properties of the layer and the charging and discharging properties of the resulting battery.

In another aspect of the invention, a method of manufacturing a solid state battery is provided, the method comprising: (a) providing a substrate; and providing a first battery cell thereon by (b) depositing a lithium-enriched cathode material using a direct current, DC, sputtering process to provide a cathode layer; (c) depositing a lithium-containing electrolyte layer on the cathode layer using the DC sputtering process; and (d) depositing an electrically conductive layer on the electrolyte layer using the DC sputtering process. In some embodiments, the above-cited steps (b) to (d) of the method for manufacturing a thin-film solid state battery may be repeated on the first battery cell, such as to stack multiple battery cells on one another using DC sputtering, in particular pulsed DC sputtering. In some embodiments, the method of manufacturing a thin-film solid state battery may further comprise enriching a cathode material with a lithium-based enriching component to provide the lithium-enriched cathode material.

In another aspect, a method of manufacturing a thin-film solid state battery comprising a cathode layer and a thin-film arrangement as previously described, is provided. The modifications and embodiments as described herein above in relation to the method for manufacturing the cathode layer and the thin-film arrangement also constitute modifications and embodiments of the method for manufacturing the thin-film solid state battery. In particular, the thin-film solid state battery may be manufactured by a method combining the steps of the method for providing the cathode layer and its respective modifications and the steps of the method for providing the thin-film arrangement and its respective modifications, with the related benefits being the same as described herein above. In particular, the manufacturing may also be performed using a pulsed DC sputtering process as this process is particularly beneficial with respect to the properties of the resulting layers as described herein above.

In some embodiments, the thin-film solid state battery may comprise a number of battery cells which are stacked upon one another. That is, in some embodiments, the cathode layer of a second battery cell is provided on the electrolyte layer of the first battery cell. Expressed differently, the thin-film solid state battery may have a monolithic arrangement of multiple cells stacked onto one another, such that multiple cells are provided on top of one another at the same position on the substrate.

In some embodiments, any of the manufacturing methods described herein above may encompass crystallizing the resulting cathode layer by targeted annealing using a flash lamp.

In this context, the term targeted annealing refers to a concept in which a precise and localized heating of a layer using short pulses of light with high energy is performed. For this purpose, a flash lamp may be used. More specifically, it is foreseen that the cathode layer is annealed using the targeted annealing process. Compared to conventional thermal annealing processes in which gradual and uniform heating of the entire sample is performed, such as furnace annealing, targeted annealing allows to concentrate the heating to a particular layer, thereby enabling a process in which one specific layer - in particular the cathode layer - may be annealed without having too much heat dissipate into the further layers already present in the sample.

This makes it possible to use materials that could not be used in case conventional annealing where to be used as it would be destroyed then. Materials that may be used when performing the annealing process as a targeted annealing process may comprise plastic or polymer foils. Further, it allows performing annealing in a stacked battery cell in which a second cathode layer is provided on a previously prepared battery cell and, thereby, ultimately, allows stacking multiple battery cells having sufficient charging and re-charging properties onto one another.

Hereby, the use of a flash lamp for targeted annealing may be particularly beneficial as the flash lamp provides for the right balance of pulse length, energy density and targeting precision to anneal a specific part of a layer, in particular a cathode layer, in a thin-film solid state battery.

In another aspect, the invention relates to a thin-film solid state battery manufacturable by the previously described method. In some embodiments, the cathode layer of such a solid state battery may comprise a crystal structure having a (101) orientation and/or a (104) orientation.

According to a further aspect, a thin-film solid state battery is provided comprising: a substrate, a battery cell disposed on the substrate, the battery cell comprising: a cathode current collector, a cathode layer, and an electrolyte layer, whereby the cathode layer comprises a crystal structure achieved by targeted annealing using a flash lamp.

The substrate may, as previously described, particularly correspond to a foil on which the different layers of the battery cell are deposited. In some embodiments, the foil may be made from a plastic material with a thin film of titanium or platinum deposited thereon. In some embodiments, a polymer-based substrate may alternatively or additionally be used. As further explained below, the usage of the polymer-based and/or the plastic-based foil is enabled by using the above-mentioned targeted annealing process, the reasons for which will be outset herein below.

Further, the term cathode current collector may refer to a conductive layer formed of a conductive material, such as titanium, aluminum or nickel. The cathode current collector is configured to collect and transport electrons from the cathode layer of the thin-film solid state battery to an external circuit during charging. In some embodiments, the cathode current collector may be integral with the substrate if the substrate corresponds to a conductive foil. In other embodiments, where the substrate is made from a non-conductive material, such as a polymer, the cathode current collector may be an element separate from the substrate.

The cathode layer, i.e. the layer acting as a cathode may particularly be composed of a lithium-containing material, such as LiNi_{0·8}Mn_{0·1}Co_{0·1}O₂. In order to achieve proper performance, the cathode layer has to be crystalized. While it may be possible to deposit the thin-film already as a crystalized layer, this is very complicated. Accordingly, the cathode layer is usually formed first and, only upon forming the same, crystalized using an annealing process. Insofar, conventional annealing techniques have their issues to as they result in heating of the substrate which makes usage of polymer substrates impossible. Further, due to the high temperatures needed, even materials such as aluminum or other metal foils become problematic. In addition, conventional annealing techniques may damage the electrolyte layer. In the context of this application, in particular a targeted annealing process may be used.

The term targeted annealing refers to a concept in which a precise and localized heating of a layer using short pulses of light with high energy is performed. For this purpose, a flash lamp may be used. More specifically, it is foreseen that the cathode layer - which requires annealing for the purpose of crystallization - is annealed using the targeted annealing process. Compared to conventional thermal annealing processes in which gradual and uniform heating of the entire sample is performed, targeted annealing allows concentrating the heating to a particular layer, thereby enabling a process in which one specific layer - in particular the cathode layer - may be annealed without inducing too much heat in the further layers already present in the sample. This is achieved, on the one hand, by the targeted nature of the annealing process and, on the other hand, by the fact that the light used for annealing the cathode layer is, due to its wavelength, absorbed relatively little by the other layers. This means that these layers do not receive much (light) energy and do not heat up, further avoiding damage to the other layers.

This makes it possible to perform annealing in a battery cell in which (a) a polymer or similar material is used as a substrate and (b) a second cathode layer is provided on a previously prepared battery cell. This ultimately allows stacking multiple battery cells having sufficient charging and re-charging properties onto one another. Furthermore, flash lamp annealing offers advantages over conventional annealing by providing rapid thermal processing in extremely short time (in the range of milliseconds) at very high temperatures. This reduces the thermal damage to temperature-sensitive layers like the electrolyte and achieves the desired crystallinity without prolonged heating. This allows using materials that could not be used in case conventional annealing where to be used as it would be destroyed then. Materials that may be used when performing the annealing process as a targeted annealing process may comprise plastic or polymer foils.

Hereby, the use of a flash lamp for targeted annealing may be particularly beneficial as the flash lamp provides for the right balance of pulse length, energy density and targeting precision to anneal a specific part of a layer, in particular a cathode layer, in a thin-film solid state battery. In some embodiments, a single pulse between 200 V and 900 V using a pulse duration between 10 microseconds up to 10 minutes may be used. In some embodiments, specifically a single pulse having 500 V and enduring for 500 microsecond may be particularly beneficial. Hereby, these values may be varied depending on the position and distance of the flash lamp. Such single pulse may be performed once or may be repeated. Insofar a range between 1 to 10 single pulses has been found as being particularly beneficial.

A single pulse may, in some embodiments, be divided into micro pulses, i.e. a number of smaller pulses divided amongst the entire pulse duration. As an example, in case of a 500 microsecond pulse duration, 50 micro pulses, each having a duration of 5 microseconds may be used. This corresponds to an active cycle of 50%. In other examples, an active cycle of 60% or 70% or 75% or above may be used which would result in a corresponding number of micro pulses for a given pulse duration.

Further, as discussed above the electrolyte layer may particularly correspond to a layer made from a material that facilitates the conduction of lithium ions between the cathode and anode while preventing electron flow, thereby controlling energy release. The electrolyte layer may particularly made from a compound containing lithium, phosphorus and oxygen, such as LiPON.

In some embodiments, a battery cell formed by a cathode current collector, a cathode layer and an electrolyte layer may be formed on a foil as substrate in a single cell stack arrangement. That is, a number of single cell stacks, including the cathode current collector, the cathode layer and the electrolyte layer may be deposited on a foil such as to form the thin-film solid state battery. In some embodiments, particularly two or four single cell stacks may be provided in parallel to form a thin-film solid state battery according to the invention. In other embodiments, more or less single cell stacks may be provided in parallel on the foil.

In some embodiments, the thin-film solid state battery may also include multiple battery cells stacked onto one another to form a multi-cell monolithic thin-film solid state battery. Insofar, the term stacked onto one another refers to the sequential deposition of multiple battery cells onto one another. More specifically, the cathode current collector, the cathode layer and the electrolyte layer may be sequentially deposited onto one another to form a first battery cell and another stack of cathode current collector, the cathode layer and the electrolyte layer may be sequentially deposited on the first battery cell to form the second battery cell. This process may be repeated several times to provide a battery cell stack including multiple battery cells.

In some embodiments, the battery cell may further comprise an anode current collector. The term anode current collector may refer to a layer of conductive material, such as copper, that is configured to collect the electrodes from an anode and transport them towards an external circuit during charging and discharging.

In some embodiments, the crystal structure of the cathode layer may correspond to a (101) crystal orientation and/or a (104) crystal orientation.

It has been found that the use of targeted annealing with a flash lamp may result in a crystallization orientation that is different from the conventional (003) orientation achieved using conventional annealing, such as furnace annealing. This different crystal orientation may particularly correspond to a (104) and/or a (101) orientation, both of which are superior over the (003) orientation as they provide for an alignment of the crystal lattice in a way that allows the lithium ions to be transported through the layer along a direction perpendicular to the layer plane, i.e. in parallel to the layer surface, whereas in the (003) orientation results in a transport of the lithium ions in a plane perpendicular to the substrate. As already discussed elsewhere in this application, the movement in a plane perpendicular to the layer enhances the efficiency of the lithium ion transport, thereby leading to improved charging and discharging rates and better overall performance of the thin-film solid state battery.

In some embodiments, the thin-film solid state battery may comprise at least two battery cells stacked onto one another. In some embodiments, the thin-film solid state battery may further comprise a blocking layer between each one of the plurality of battery cells.

In some embodiments, the cathode layer may comprise at least one of nickel, cobalt, manganese, aluminum or vanadium.

According to some embodiments, once the cathode layer has been sputtered in the explained manner, it is subjected to the targeted annealing. That is, the targeted annealing may particularly place once the cathode layer has been formed, but prior to forming any further layer. Following this timely order ensures that the cathode layer is properly crystallized without exposing the sensitive electrolyte layer to any high temperatures. Alternatively, the targeted annealing may also be performed while the sputtering is still ongoing. That is, in some embodiments, a first portion of the cathode material is deposited using sputtering, in particular DC sputtering, thereby forming a first part of the cathode layer which is then subjected to a first round of targeted annealing using a flash lamp. Subsequently, a second portion of the cathode material is deposited, forming a second part of the cathode layer. This second part is then, again, subjected to another round of targeted annealing using a flash lamp. In this manner, also a third, fourth, fifth, etc. portion of the cathode material may be deposited with a respective round of targeted annealing using a flash lamp performed in between. This also allows to properly crystalize the cathode layer while at the same time allowing for a more precise targeting of the light pulses emitted by the flash lamp. This fits well into the structure of industrial sputtering systems where several targets (material/sources) are provided at the same time.

As a further alternative, the cathode layer may be annealed using targeted annealing after one or more further layers have been deposited on it. In order to achieve this, the further layers need to be formed of a material that is transparent to the particular wavelength of the light pulses emitted by the flash lamp, such that the light pulses may travel through the layers deposited upon the cathode layer without losing too much of their energy.

In an embodiment, the step of subjecting the cathode layer to targeted annealing may comprise heating the cathode layer to a temperature between 500°C and 900°C; more particularly to a temperature between 600°C and 700°C.

In that regard, the optimal temperature to which the cathode layer needs to be heated depends on the material from which the cathode layer is formed. It further depends on the layer thickness and the layer density. In general, thicker layers may require a higher temperature, whereas denser layers may require a lower temperature. Further, the temperature may be dependent on the type of substrate. As an example, a crystalline substrate may influence the crystallization process of the cathode material to require higher temperatures, whereas an amorphous substrate may require lower temperatures. As such, the optimal annealing temperature has to be selected for each specific case. In general, however, a certain variance in temperature will still lead to a proper crystallization.

In some embodiments, the targeted annealing may be performed for an annealing time between 0.1 seconds to 1.5 seconds, more particularly for an annealing time between 0.5 seconds to 1 second. This timeframe allows for enough energy to be transferred through the flash light pulses to achieve proper crystallization while at the same time minimizing heat emanation through the remainder of the already-formed thin-film arrangement. Accordingly, targeted annealing allows reducing the annealing time significantly compared to conventional annealing such as furnace annealing which typically takes hours to achieve appropriate crystallization.

Factors which play a role in the annealing process are, in particular, the time duration of the pulses as well as the pulse's wavelength. In some embodiments, the flash lamp may be configured to emit an annealing pulse having a time duration of 0.1 milliseconds to 10 milliseconds. In some embodiments, the flash lamp may be configured to emit an annealing pulse having a spectrum between 200 nm to 1500 nm. A suitable flash lamp for this purpose may be a xenon electric arc flash lamp emitting a broadband spectrum. Insofar, the commercially available PulseForge^{®} 1300 photonic curing tool by NovaCentrix Corp., Austin, Texas, USA or the likewise commercially available Noblelight pulsed Xenon- and Krypton- flash lights by Excelitas Technologies (formerly Heraeus Noblelight) may be used for the present purposes.

It is also important to determine an appropriate pulse time and an appropriate annealing energy. Hereby, the optimal values for both are variable and may be dependent on factors such as substrate, atmosphere and even type of light pulse. Insofar, the right mixture between pulse time and wavelength is important. Hereby, it is recommendable to not go into extremes. As an example, pulses having an extremely long wavelength and a longer pulse duration may be insufficient to initiate the crystallization. On the other hand, pulses having an extremely short wavelength and a short pulse duration might result in a melting of the material instead of a crystallization process. Thus, a balance needs to be found between pulse duration, annealing energy and annealing time. Further, in case of thicker layers, such as thicker cathode layers, it may be necessary to perform the flash lamp annealing in multiple steps.

In another aspect, the use of a flash lamp to perform targeted annealing of at least one cathode layer of a thin-film solid state battery comprising a number of battery cells is disclosed. It is noted that this aspect includes the same preferred embodiments as described herein above in relation to the remaining aspects of the invention.

The general concept described herein above will be described in relation to the subsequent figures, in which
Fig. 1 illustrates an embodiment of a thin-film solid state battery comprising a stack of three battery cells;
Fig. 2 illustrates an exemplary sputtering arrangement according to an embodiment;
Fig. 3 illustrates a manufacturing method according to an embodiment;
Fig. 4 illustrates a further embodiment of a thin-film solid state battery;
Fig. 5 illustrates further embodiments of a thin-film solid state battery;
Fig. 6 illustrates the manufacturing of a thin-film solid state battery using flash lamp annealing;
Fig. 7 illustrates a modification of the process according to Fig. 6;
Fig. 8 illustrates the differences in crystal orientation and its impact on Li ion transport for conventional versus flash annealing; and
Fig. 9 illustrates the influence of the different orientations on the conductivity in the thin-film solid state battery.

These figures are merely illustrative and shall not be construed as limiting the general concept to the specific embodiments shown therein.

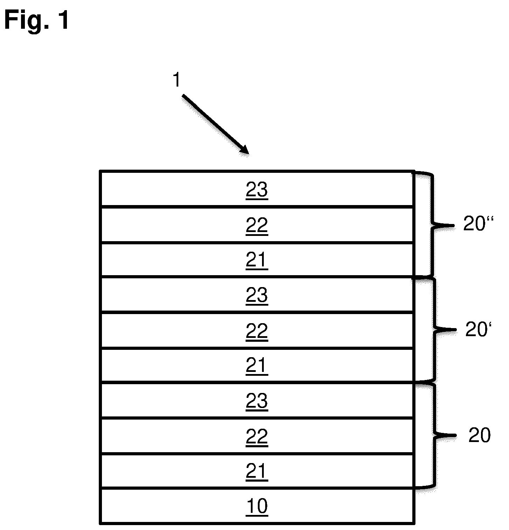

Insofar, Figure 1 illustrates an exemplary embodiment of a thin-film solid state battery 1 in which multiple battery cells 20, 20' and 20" are provided on a substrate 10, such as a foil, to form a monolithic multi-cell thin-film solid state battery. The first, lowermost battery cell 20 comprises a cathode layer 21 on which an electrolyte layer 22 is deposited. Further, electrically conductive layer 23 is deposited on electrolyte layer 22. Each of the layers may be deposited using a direct current, DC, sputtering process as further described herein below.

On top of battery cell 20, i.e. on top of electrically conductive layer 23, battery cell 20' is provided. Battery cell 20' has the same structure as battery cell 20, i.e. includes a cathode layer 21, an electrolyte layer 22 and an electrically conductive layer 23, whereby all layers have been deposited using a DC sputtering process. However, the invention also encompasses cases where the battery cells stacked onto another may be different in terms of structure or material used for the different layers or in terms of the manufacturing method used.

Further, thin-film solid state battery 1 comprises a battery cell 20" stacked upon battery cell 20' and, also, including a cathode layer 21, an electrolyte layer 22 and an electrically conductive 23 deposited onto one another using a DC sputtering process. Also in this case, it is noted that the concept of the invention is not limited to the specific arrangement of Fig. 1, but may also encompass a third battery cell having a different structure or different material used for different layers and/or may have been provided using a different manufacturing method compared to the other battery cells.

It is also noted that the use of three battery cells stacked onto one another is merely exemplary. A thin-film solid state battery according to the invention may also include less or more battery cells stacked onto one another.

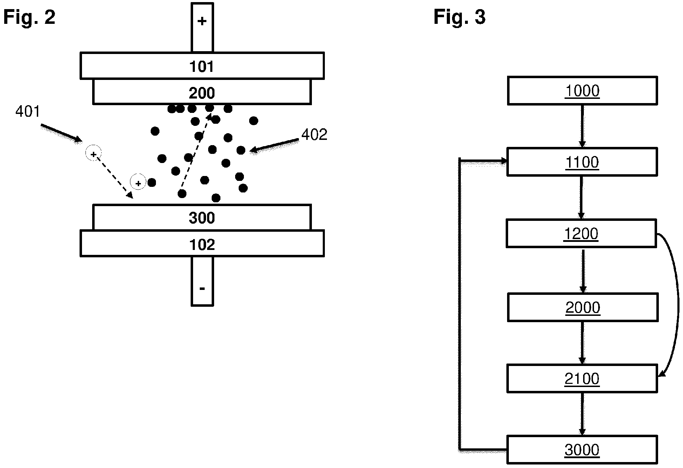

Figure 2 illustrates an exemplary sputtering arrangement for performing DC sputtering having anode 101 and cathode 102. On anode 101, a substrate 200 is provided, whereas on cathode 102, a target 300 is provided. The target 300 serves as target for positively charged ions 401 that are shot onto the target 300 such as to affect the target 300 to eject respective 402. The atoms 402 are ejected towards the substrate 200, such as to be deposited thereon.

In the context of the present application, the sputtering process may particularly be a DC sputtering process, even more particularly a pulsed DC sputtering process. In a pulsed DC sputtering process, the voltage applied such as to cause the charged ions 401 to be incident on the target is switched on and off. Only during the on-phase, charged ions 401 are incident on the target 300 and cause the atoms 402 to be ejected. During the off-phase, any accumulated charge on the target dissipates. This reduces arcing in the target and improves the sputtering result.

Further, in the context of the present application, the target 300 may comprise the material for the cathode layer. The material for the cathode layer may hereby particularly correspond to a lithium-enriched cathode material, i.e. a cathode material in which the lithium-amount has been artificially enhanced, such as e.g. from a stoichiometric composition of e.g. Li₁CoO₂ to a composition of Li₂CoOₓ.

Further, the target 300 may comprise the material for the electrolyte layer, i.e. a material ensuring a high ionic conductivity for the resulting layer. Such materials may particularly comprise lithium-containing electrolyte materials, such as one or more of lithium carbonate (Li₂CO₃), lithium nitrate (LiNO₃), lithium nitride (Li₃N), lithium peroxide (Li₂O₂), lithium phosphorus oxide (Li₃PO₃), lithium imide (Li₂NH) or lithium amide (LiNH₂). Furthermore, the target may comprise the material for the electrically conductive layer, such as copper, silver or titanium.

In some embodiments, three targets may be provided such as to receive incident charged ions. One of these targets includes the material for the cathode layer, one includes material for the electrolyte layer and one includes the material for the electrically conductive layer. Further targets may also be provided, should further layers be envisioned and/or should different materials be used for the same layer in different battery cells.

Figure 3 illustrates an exemplary method for manufacturing a thin-film solid state battery. In step 1000, a conventional cathode material, such as LiNi_{0.8}Mn_{0.1}C_{0.1}O₂LiNi_{0.8}Mn_{0.1}Co_{0.1}O₂ (NMC811), is mixed with a lithium-based enriching component, such as lithium oxide (Li₂O) or lithium carbonate (Li₂CO₃), thereby lithium-enriching the cathode material such as to obtain the lithium-enriched cathode material to be deposited on a substrate.

In step 1100, the lithium-enriched cathode material is deposited on a substrate using a DC sputtering process, in particular a pulsed DC sputtering process. Hereby, the deposition is performed until the cathode layer has reached a certain thickness. In some embodiments, a thickness between 10 nanometers and 100 micrometers may particularly be achieved.

Subsequently, in step 1200, the thus-deposited cathode layer is annealed using targeted annealing, in particular targeted annealing employing a flash lamp. Using a flash lamp for targeted annealing leads to the cathode layer becoming crystalized with a (101) crystal orientation of the lithium-enriched NMC811. Compared to the (003) crystal orientation achieved using a conventional annealing process this (101) crystal orientation has the benefit of better conductivity properties, as further outlined herein below.

In step 2000, a lithium-containing electrolyte material as discussed above may be prepared by mixing an electrolyte material with a lithium-containing material. The thus prepared lithium-containing electrolyte material may be deposited, in step 2100, on the cathode layer using a DC sputtering process, such as a pulsed DC sputtering process, to form an electrolyte layer. Subsequently, in step 3000, an electrically conductive material may be deposited on the electrolyte layer using a DC sputtering process, such as a pulsed DC sputtering process, to form an electrically conductive layer.

Upon forming the electrically conductive layer, a first battery cell is complete. This battery cell may be provided next to further single battery cells on a foil acting as substrate. Alternatively, multiple battery cells may be stacked onto one another.

In the latter case, this may be achieved by the method reverting back to step 1100 and restarting with the deposition of the lithium-enriched cathode material to form a cathode layer. In this case, the cathode layer may particularly be formed on the electrically conductive layer of the first battery cell. The method then moves to step 1200 in which the thus-formed cathode layer is annealed using targeted annealing. At this stage, another benefit of the targeted annealing process comes into play as the targeted annealing allows the annealing of the cathode layer at an appropriate temperature to effect crystallization while at the same time avoiding any damage to the underlying layers, such as the electrically conductive layer and/or the electrolyte layer.

Upon finishing the annealing, the method moves to step 2100 in which the lithium-containing electrolyte material is deposited using the DC sputtering method described earlier to form the electrolyte layer. In step 3000, the electrically conductive layer is then formed on the electrolyte layer to complete the second battery cell. This process may be repeated as many times as needed to form a stack of battery cells, such as to achieve a monolithic thin-film solid state battery.

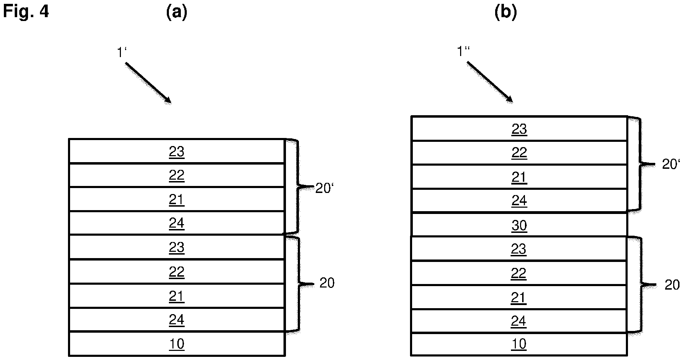

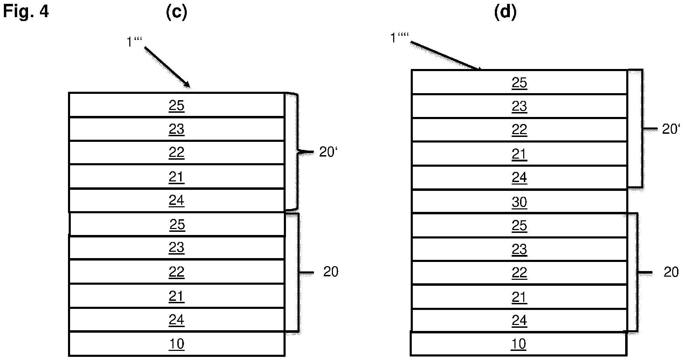

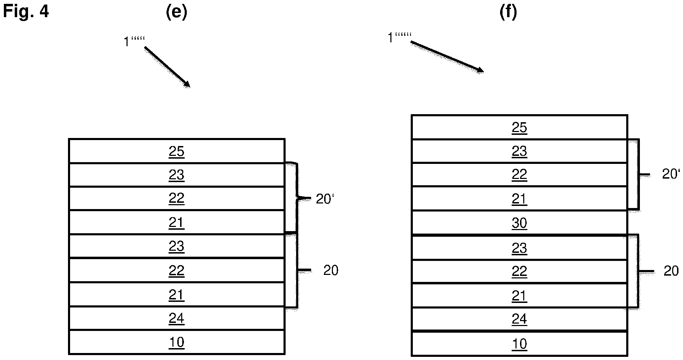

Fig. 4 shows a number of exemplary embodiments of the thin-film solid state battery according to the invention. In these figures, two battery cells 20 and 20' are stacked onto one another on a substrate. It shall be noted, however, that the number two is merely exemplary here and that the stack may also comprise more than two battery cells or also only a single battery cell.

Fig. 4(a) shows a thin-film solid state battery 1' comprising a substrate 10 on which a cathode current collector 24 is deposited as a first layer. The substrate 10 may be made of a material such as a metal foil. Alternatively or additionally, the substrate may be made of a plastic with a thin metal later deposited therein. Even further alternatively, the substrate 10 may comprise a polymer.

The material for the cathode current collector 24 may be the same as that for the substrate 10 if the substrate 10 is made of a metal foil or may be made from a different, current collecting material. In general, the material for the cathode current collector 24 may be selected based on considerations such as thickness, density, electrical conductivity, thermal conductivity, chemical stability and thermal expansion. Hereby, one has to consider that the thickness of the layer directly affects the volumetric and gravimetric energy density of the battery cell as it adds "dead" mass.

A further contributing factor to higher mass is a higher density of the material. Therefore, depending on the application, either a higher or a lower density may be useful. The electrical conductivity influences the necessary layer thickness. Simply speaking can a higher electrical conductivity allow to use thinner layers. As is evident from this, the electrical conductivity and the thickness - and, hence, the mass - have a certain interrelationship. That is, materials with higher conductivity, in the end, also reduce the mass of the battery cell.

In addition to the electrical conductivity, the thermal conductivity has to be considered. The higher the thermal conductivity, the better the protection of the underlying layers during annealing, in particular with a flash lamp, and during fast charging and/or discharging of the battery. This is the case since, during annealing, a high thermal conductivity means that the heat distributes faster through the layer, allowing a faster annealing to take place and reducing the risk of affecting the underlying layers. Similarly, a high thermal conductivity leads to a faster charging and/or discharging process, avoiding that the heat generation caused therefrom is distributed to the underlying layers. Finally, the material should have a high chemical stability, as it has to provide for a sufficient stability against the cathode.

In view of the above, titanium would be a very suitable choice, as it has a good electrical conductivity (2.4 MS/m). However, its thermal conductivity is relatively low (22W/m-K) compared to what is desired in the present context. Further, titanium is relatively stiff and not very ductile which makes its handling challenging. As an alternative, aluminum could be used. Its electrical conductivity is sufficiently good (37.7 MS/m) and its thermal conductivity is also suitable (235 W/m-K), but, while it is relatively easy to handle as such, it is prone to tearing during the handling process. As a further alternative, copper may be used which as a good electrical conductivity (59.6 MS/m) and a high thermal conductivity (401 W/m-K). However, copper is not stable against some suitable cathode materials such as NMC811 which leads to a rapid degradation of the capacity during usage of the battery cell. Another suitable candidate may be nickel which has an electrical conductivity of 14.3 (MS/m) and a thermal conductivity of 90 (W/m-K), providing very robust foils.

However, compared to the materials mentioned before nickel remains a "sufficient" candidate with respect to all factors, meaning that the remaining materials, if handled correctly, provide for more suitable candidates.

Upon the cathode current collector 24, a cathode layer 21 is provided. Cathode layer 21 may correspond to the cathode layer as described in relation to Fig. 1. On top of the cathode layer 21, an electrolyte layer 22 may be provided which may also correspond to the electrolyte layer 22 as described in relation to Fig. 1. On top of this electrolyte layer 22, electrically conductive layer 23 is deposited which may correspond to the electrically conductive layer as described in relation to Fig. 1. These layers form a first battery cell 20. Directly on top of first battery cell 20, a second battery cell 20' is provided which is similar in structure as first battery cell 20. However, it shall be noted that in other embodiments, the structure may be different. It shall also be noted that there may be more or less than two battery cells 20, 20' stack onto one another in thin-film solid state battery 1'.

Fig. 4(b) shows a thin-film solid state battery 1" which structure is largely similar to that of thin-film solid state battery 1' with like reference signs illustrating similar elements. That is, the structure of the thin-film solid state battery 1" is the same except for blocking layer 30 which deposited between the electrically conductive layer 23 of the first battery cell 20 and the cathode current collector 24 of the second battery cell 20'. The blocking layer serves to separate the first and second battery cell 20, 20' from one another such as to reduce or eliminate any possible correlations between the two. The blocking layer may also be deposited using a sputtering process, such as a DC or a reactive sputtering process. Suitable materials for the blocking layer include any material for which the lithium conductivity is zero or almost zero. As an example, transition metal oxides, such as aluminum oxide or an oxide of a different transition metal, may be used. Alternatively or additionally, amorphous structures may be used as lithium does not easily propagate through amorphous materials.

Fig. 4(c) illustrates a thin-film solid state battery 1‴ also having a similar structure to that of thin-film solid state battery 1' of Fig. 4(a). Again, the same elements and layers of the thin-film solid state battery are designated with the same reference signs and are implemented in a similar manner as described in relation to Figs. 1 and 4(a). However, compared to the thin-film solid state battery 1' of Fig. 4(a) the thin-film solid-state battery 1‴ of Fig. 4(c) further includes an anode current collector 25 deposited on the electrically conductive layer 23 of battery cell 20 and another anode current collector 25 deposited on the electrically conductive layer 23 of battery cell 20'. In this case, the electrically conductive layer 23 may particularly be ionically and/or electrically conductive, depending on whether or not the lithium needs to emanate through the electrically conductive layer 23.

Fig. 4(d) illustrates a thin-film solid state battery 1"" corresponding to a modification of the thin-film solid state battery 1‴ with same reference numbers designating the same elements. The thin-film solid state battery 1"" is modified compared to the thin-film solid state battery 1‴ in that it also includes a blocking layer 30 which may be implemented in a similar manner as described in relation to Fig. 4(b). In the case of Fig. 4(d) the blocking layer 40 is deposited on the anode current collector 25 of battery cell 20 and below the cathode current collector 24 of battery cell 20'.

It is noted that it would also be possible, as a modification to the embodiment of Figs. 4(a) to 4(d) to have a multi-cell stack including multiple battery cells 20, 20' stacked on top of each other on a substrate, in which only a single cathode current collector and a single anode current collector are provided, whereby the single cathode current collector is provided on the substrate 10 and the single anode current collector is proved on top of the last battery cell in the stack. This would render a multi-cell monolithic battery having a simpler structure compared to one where multiple current collectors are present.

Such a modification is shown in Figs. 4(e) and Fig. 4(f), respectively. In particular, Fig. 4(e) shows a thin-film solid state battery 1‴ʺ in which only a single cathode current collector 24 is provided on the substrate and only a single anode current collector 25 is provided on top of the battery cell stacks 20, 20'. The battery cell stacks 20, 20' correspondingly do not include a cathode current collector 24 and/or an anode current collector 25. Further, Fig. 4(f) shows a thin-film solid state battery 1‴‴ which is similar to that of Fig. 4(e), but includes a blocking layer 30.

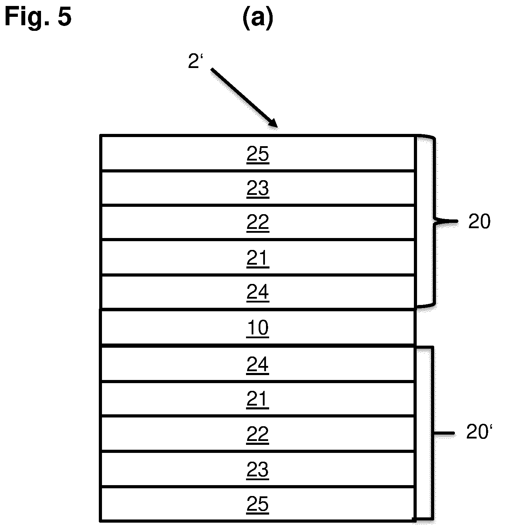

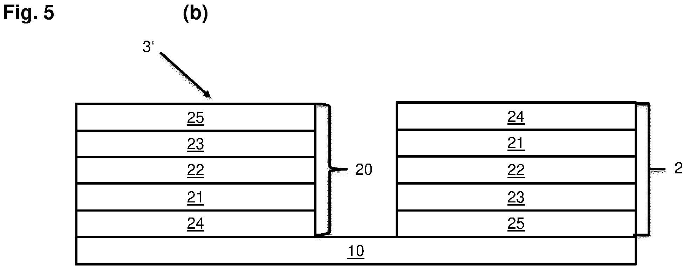

While in the embodiments described herein above, multiple cells are deposited on top of one another to form the thin-film solid state battery, it shall be understood that, in other embodiments, the stack may only comprise a single battery cell with multiple battery cells being stacked in parallel to each other on the foil. Possible embodiments of this kind are shown in Fig. 5.

Insofar, Fig. 5(a) illustrates one possible embodiment according to which both sides of the foil acting as the substrate may be used for depositing battery cells thereon. In these cases, both, the front and the back of the foil are used as a substrate and the depositing is mirrored on both sides. More particularly, Fig. 5(a) shows an exemplary embodiment of thin-film solid state battery 2' in which one battery cell 20, 20' is deposited on each side of foil 10. The battery cells 20 and 20' may hereby particularly correspond to battery cells 20, 20' as shown in Figs. 4(a) to 4(f). The benefit of providing battery cells on each side of the substrate has the benefit of a faster manufacturing since both sides may be sputtered at the same time. Further, it improves the stability of the substrate as the tension distribution on the substrate is equated on each side.

Further, Fig. 5(b) illustrates another possible embodiment according to which multiple battery cells may be arranged in parallel on one side of the foil. That is, instead of stacking the multiple battery cells onto one another, they are deposited in parallel on the foil acting as substrate 10. Insofar, Fig. 5(b) shows battery cells 20, 20', both of which are provided on the same side of the foil. In some embodiments, two or four of such battery cells may be provided in parallel on one single substrate 10. In some embodiments, more battery cells may be provided in parallel.

It shall further be noted that the embodiments of Fig. 5(a) and Fig. 5(b) may be combined with one another, i.e. the parallel arrangement of multiple battery cells may be performed on both sides of the foil acting as substrate 10. Hereby, it may be beneficial to have the same parallel arrangement on both sides, i.e. if two or four battery cells are provided on one side, to have two or four battery cells also on the other side. However, the invention also encompasses having an asymmetric number of battery cells on each side.

Further, while in the embodiment of Fig. 5(a) only one battery cell is deposited on each side of substrate 10, it is noted that multiple battery cells stacked onto one another may also be deposited on each side. Further, while in the embodiment of Fig. 5(b) only one battery cell is deposited in parallel to only one further battery cell on substrate 10, it is noted that multiple battery cells stacked onto another may also be deposited in parallel on the substrate 10. Insofar, the deposited battery cell on each side may hereby particularly correspond to one of battery cells 1, 1', 1", 1‴, 1"", 1‴ʺ or 1‴‴.

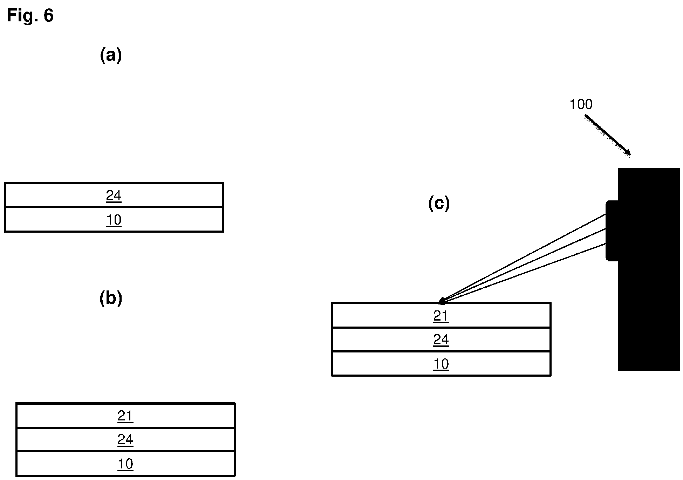

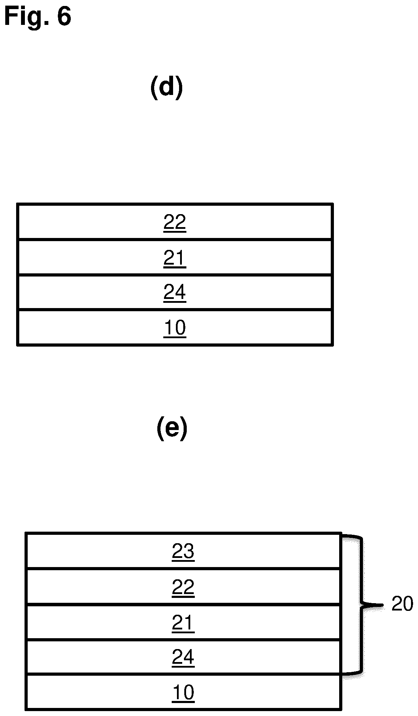

Fig. 6 illustrates a manufacturing process for a thin-film solid state battery using targeted annealing according to an embodiment. Specifically, in Fig. 6(a) a thin-film arrangement is illustrated in which a cathode current collector 24 has been deposited on a substrate. The cathode current collector 24 may hereby be formed by DC sputtering using a suitable material, such as titanium, copper, nickel and/or aluminum, as discussed above.

As illustrated in Fig. 6(b), a cathode layer 21 may be formed on the cathode current collector 24. The cathode layer 21 hereby particularly correspond to a cathode layer 21 formed of a lithium-enriched cathode material using a DC sputtering process.

Fig. 6(c) further illustrates a flash lamp 100 which is used to emit short, controlled pulses of light with high energy on the cathode layer 21. This process is called targeted annealing, as the controlled light pulses with the high energy cause a localized heating in the cathode layer. Due to this heating being very localized and limited to the cathode layer, the underlying cathode current collector and/or the underlying substrate may be made from a material that is not very heat resistant as they are not heated during the annealing process. This allows to make use of a broader range of materials for, for example, the substrate. For example, polymer foils and/or plastic foils may be used as a substrate when targeted annealing is performed. A further benefit of such targeted annealing process is that, due to its localized nature, annealing may be performed much faster compared to conventional annealing, such as e.g. furnace annealing. Specifically, instead of needing hours, the annealing can be performed in a time frame between a portion of a second and a few seconds.

For this purpose, an annealing time between 0.1 second to 1.5 second, more particularly for an annealing time between 0.5 second to 1 second is particularly beneficial as this timeframe allows for enough energy to be transferred through the flash light pulses to achieve proper crystallization while at the same time minimizing heat emanation through the remainder of the already-formed thin-film arrangement. Accordingly, in the exemplary embodiment of Fig. 6, the flash lamp corresponds to a xenon electric arc flash lamp emitting a broad light spectrum of short pulses. More specifically, in the exemplary embodiment, the flash lamp emits annealing pulses having a time duration of 0.1 milliseconds to 10 milliseconds with a light spectrum of said pulses being in the range between 200 nm to 1500 nm.

In the specific embodiment of Fig. 6, the cathode material may particularly correspond to NMC811. In this case, a single flash pulse having 500 V and enduring for 500 microseconds may be particularly beneficial. Hereby, the single flash pulse may be divided into a set of micro pulses. This division may occur with a 50% active cycle, meaning that one single pulse consists of 50 micro pulses each having a duration of 5 microseconds. It shall be noted, however, that this is only an example. Other active cycles, pulse lengths, pulse energies and wave lengths may be used to perform targeted annealing. The specific selection of parameters hereby depends on the thickness of the layer, the materials used, the distance of the flash lamp and the like. The skilled person will readily understand how to vary these parameters to achieve the desired results.

This targeted annealing of the cathode layer using a flash lamp leads to the cathode layer being crystalized. Hereby, due to the speedy character of the targeted annealing process, the resulting crystal orientation differs from that achieved through conventional, non-localized annealing. In particular, the targeted annealing process leads to a (101) or (104) crystal orientation in the cathode layer, in particular a cathode layer made of NMC811. Which crystal orientation is achieved hereby depends on the layer thickness, the heating (time) and the thermal expansion coefficient of the underlying layer. depending on layer thickness, heating and thermal expansion coefficient of the underlying layer. It shall, however, be noted that both the (101) and the (104) orientation are particularly beneficial as they enhances the efficiency of the lithium ion transport through the cathode material which, in turn, leads to superior charging and discharging rates and an overall better performance of the thin-film solid state battery.

As illustrated in Fig. 6(d), upon annealing and crystallization of the cathode layer 21, an electrolyte layer 22 is deposited on the cathode layer. Preferable this depositing is performed using sputtering, in particular DC sputtering. Finally, as illustrated in Fig. 6(e), an electrically conductive layer 23 is provided on top of the electrolyte layer. This depositing may also be performed using a sputtering technique such as DC sputtering. Cathode current collector 24, cathode layer 21, electrolyte layer 22 and electrically conductive layer 23 then form battery cell 20.

In the specific embodiment of Figs. 6(a) to (e), only a single battery cell stack is provided and no multi-cell stacking is performed. Instead, e.g. two of the thus formed battery cells 20 may be arranged in series on a foil to form the thin-film solid state battery. This concept has the benefit of a relatively simple manufacturing process.

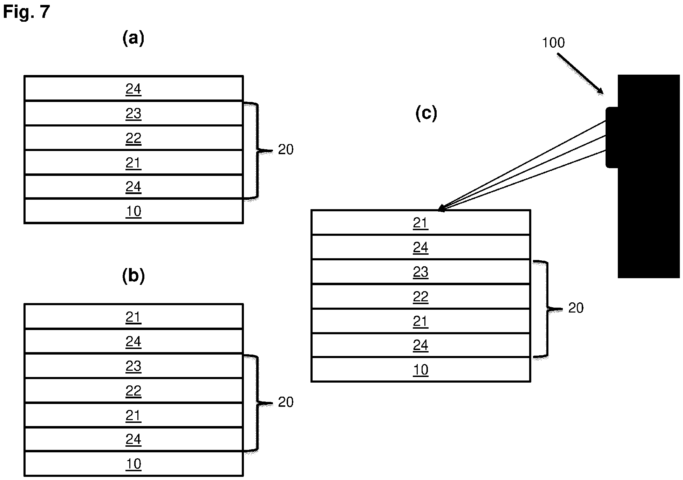

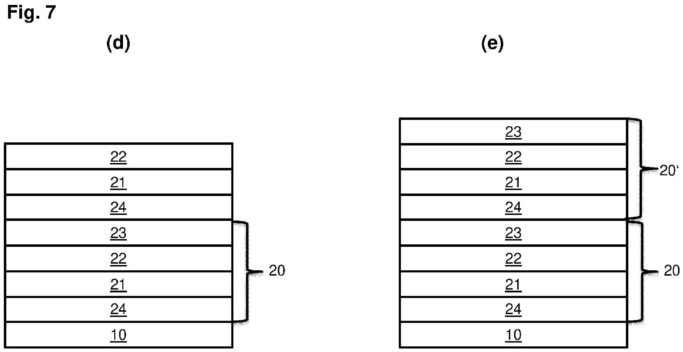

Alternatively, multi-cell stacking may be performed. Such concept is illustrated in Fig. 7. In particular, Fig. 7(a) starts from the situation in which a first battery cell 20 has already been formed. This first battery cell may particularly have been formed as described in relation to Figs. 7(a) to 7(e), i.e. by using a DC sputtering technique to deposit the individual layers and by performing targeted annealing of the cathode layer using a flash lamp. Starting from this first battery cell 20, a second battery cell shall be formed on top thereon. For that purpose, first, a cathode current collector 24 is provided on top of the electrically conductive layer 23 of battery cell 20, as illustrated in Fig. 7(a). The provision of the cathode current collector 24 may be performed as described herein above in relation to Fig. 6. It is also noted that, in some embodiments, the cathode current collector may not be provided on the electrically conductive layer, but, instead, on an anode current collector or a blocking layer used for separating one battery cell from the other.

In Fig. 7(b) cathode layer 21 is deposited on cathode current collector. The deposition of the cathode layer 21 may also be performed as described herein above in relation to Fig. 6. Then, as illustrated in Fig. 7(c), the cathode layer 21 is subjected to targeted annealing using a flash lamp. The flash lamp may emit short, high energy pulses to perform a localized heating in the cathode layer. Hereby, the pulse duration and energy may be selected to have the same value as used for the battery cell below. In other embodiments, different values may be used.

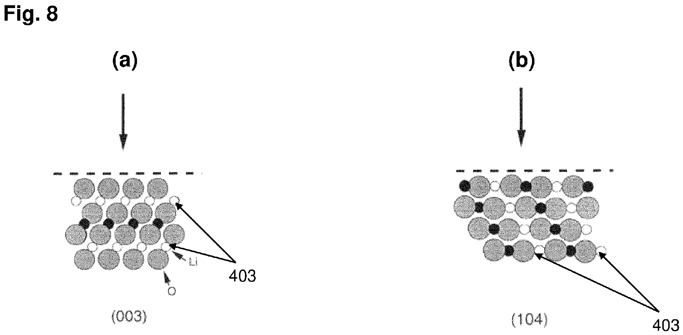

The targeted annealing process is used to crystalize the cathode layer. Once this is achieved, an electrolyte layer 22 may be deposited on the cathode layer 21. This deposition may be performed as described herein above. In particular, this deposition may encompass using a DC sputtering process. Once the electrolyte layer has be deposited, an electrically conductive layer 23 may be deposited thereon. Also in this case, the deposition may be performed as described herein above. Once the deposition is finished, a second battery cell 20' has been provided on the substrate. This process may be repeated several times until the desired stacking height has been reached. Fig. 8(a) and 8(b) illustrate the differences between an (003) and an (104) crystal orientation. As appreciable from Fig. 8(a), the (003) crystal orientation leads to the lithium ions 403 moving in parallel to the layer plane. As a result of this, the lithium transport efficiency is relatively low as the lithium ions 403, in effect, travel in the wrong general direction. By contrast, the (104) crystal orientation provides for an orientation in which the lithium ions 403 may more easily travel in the direction of the layer plane. This means that the lithium may be transported more efficiently, leading to improved charging and discharging rates and better overall performance of the thin-film solid state battery.

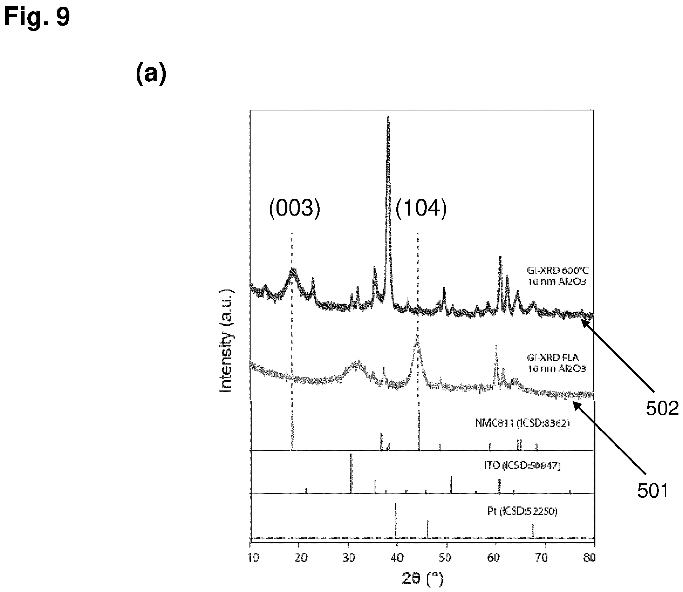

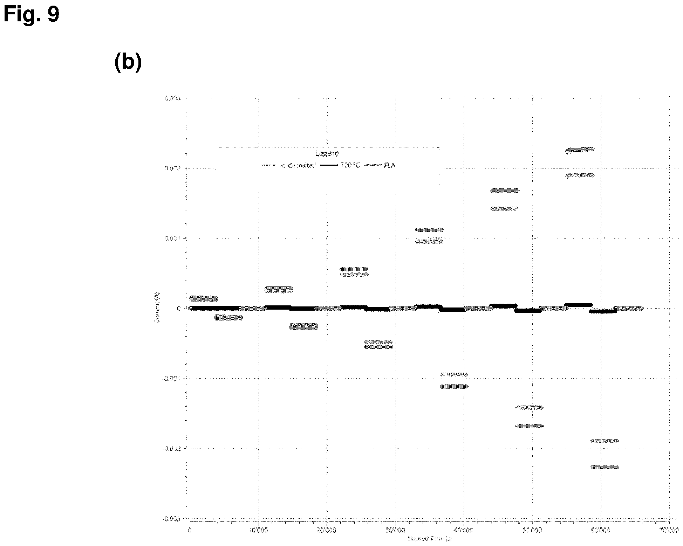

In that regard, Fig. 9 illustrates some measurement results for these different crystal orientations in the cathode layer for the example of NMC811 as cathode material. Fig. 9(a) illustrates a comparison of an X-ray diffraction spectrum 501 for a cathode having been annealed with targeted annealing using a flash lamp and an X-ray diffraction spectrum 502 for a cathode having been annealed at 600°C in a convention manner.

As appreciable from Fig. 9(a), in the case of targeted annealing a peak appears for the (104) orientation in spectrum 501, but no significant peak is shown in spectrum 502. Further, in spectrum 502, there is a peak at (003), but no significant peak for (104). From this, it may be appreciated that the crystal orientation is different depending on the annealing method used. Hereby, for the reasons outlined above, the (104) orientation is considered beneficial. It is noted that also a (101) orientation may occur using flash lamp annealing. This orientation brings forward the same benefits as the (104) orientation, at least in terms of conductivity. So, whether (101) or (104) is achieved, does not play a key role for the performance of the battery. Both orientations are equally desirable.

Further, Fig. 9(b) shows measurement results regarding the current development of lithium-enriched NMC811 as an exemplary cathode material as a function of time. Here, the values for NMC811 prior to annealing ("as deposited") are shown in bright grey, the values for NMC811 after conventional annealing (at 700°C) are shown in black and the values for NMC811 after targeted annealing using a flash lamp (FLA) are shown in dark grey.

The corresponding conductivity values may be appreciated from the below table:

| | |
|---|---|
| σ_{el, 700°C} | 0.6 S/m |
| σ_{el, as-deposited} | 26.5 S/m |
| σ_{el, FLA} | 30.9 S/m |

As appreciable from the above table, the conductivity of the not-yet-annealing material is significantly higher compared to the material achieved using conventional annealing. Further, the results for the material that has been annealed using a flash lamp are superior to those results for the not-yet annealed material and the material that has been annealed in a conventional manner. This understanding is also confirmed by Fig. 9(b) which shows the timely evolution of the current in these materials. The value for the cathode material that has undergone conventional annealing at 700°C stays relatively close to zero. By contrast, for the case where the cathode material was considered as deposited, the value increases significantly over time. This shows that the lithium-enrichment contra-acted the lithium loss that occurs during (DC-)sputtering. Further, the value for the flash-annealed material is even better than for the material as deposited showing that flash annealing indeed improves the conductivity properties even further.

It is noted that the foregoing explanations are merely exemplary. Further configurations of the thin-film solid state battery are imaginable and may be readily appreciated from this disclosure by the skilled person.

### Additional experimental information:

**Table 1: Properties of possible cathode materials (crystalline LCO and NMC811)**

| | LCO | NMC811 |
|---|---|---|
| Density | 4.9 | 5.1 |
| Space group | R3 m (166) | R3 m (166) |
| Crystal system | Trigonal | Trigonal |
| Lattice system | Rhomobohedral | Rhombohedral |
| Annealing temperature (K) | ≈1000 | ≈900 |
| Redox voltage (V) | ≈ 4 V | >3.5 V |
| Theoretical capacity (mA h/g-1) | 273 | 276 |
| | 140 | 200 |
| Practical maximum capacity (mA h/g⁻¹) | | |
| | (3 - 4.2 V) | 3 - 4.3 V |
| (voltage range) | | |
| | 0.85 (3.6 V) | 1.7 |
| Electronic conductivity (10⁻⁵ Scm⁻¹) | 33 (3.95 V) | |
| | 10⁻¹¹-10⁻¹⁰ | 2.9×10-¹¹ |
| Li diffusivity (cm²s⁻¹) | 2.49, 3.7 - 5.4 | 1.58 |
| Thermal conductivity (Wm⁻¹K⁻¹) | 10-15, 4.41 | ≈3 |
| Thermal diffusivity (10-³cm²s⁻¹) | 1.3, 0.73 | 1.0 |
| | 2.7 | 0.5 -1 |
| Heat capacity (Jg⁻¹K⁻¹) | 1.0 | 2.1 |
| Bandgap (eV) crystalline | | |
| Absorption coefficient at 600 nm (10⁵cm⁻¹) | | |

**Table 2: Properties of Flash Lamp**

| | |
|---|---|
| Spectrum (nm) | 200 - 1500 |
| Pulse duration (ms) | 0.1 - 10 |

**Table 3: Annealing properties**

| | |
|---|---|
| Temperature (°C) | 500 - 900 |
| Annealing time (s) | Variable, preferably 0.1 - 1.5 |
| Wavelength (nm) | 200 - 1500 (entire spectrum of Flash lamp) |
| Single pulse duration | 10 ms to 10 min (potentially divided into micro pulses) |
| No of pulses | 1 to 10 |
| Voltage (V) | 300 - 900 |
| Active cycle | 20% to 80% |

### List of reference numerals:

- 1, 1', 2', 3', 1", 1‴, 1"", 1‴ʺ, 1‴‴: thin-film solid state battery
- 10: substrate
- 20, 20', 20": battery cell
- 21: cathode layer
- 22: electrolyte layer
- 23: electrically conductive layer
- 24: cathode current collector
- 25: anode current collector
- 30: blocking layer
- 100: flash lamp
- 101: anode
- 102: cathode
- 200: substrate
- 300: target
- 401: positively charged ions
- 402: ejected atoms
- 403: lithium ions
- 501: flash annealing XRD spectrum
- 502: furnace annealing XRD spectrum
- 1000: enriching cathode material with lithium
- 1100: depositing lithium-enriched cathode material
- 1200: performing targeted annealing
- 2000: preparing lithium-containing electrolyte material
- 2100: depositing lithium-containing electrolyte material
- 3000: depositing electrically conductive material

## Claims

1. Method of manufacturing a cathode for a thin-film solid state battery, the method comprising:
depositing a lithium-enriched cathode material on a substrate using a direct current, DC, sputtering process to provide a cathode layer.

2. The method of claim 1, further comprising:
enriching a cathode material with a lithium-based enriching component to provide the lithium-enriched cathode material.

3. The method of any one of claims 1 or 2, wherein the lithium-based enriching component comprises lithium oxide.

4. The method of any one of claims 1 to 3, wherein the DC sputtering process comprises a pulsed DC sputtering process.

5. The method of any one of claims 1 to 4, wherein the cathode material comprises at least one of nickel or cobalt; and/or wherein the lithium-enriched cathode material comprises Li_{X}Ni_{0.8}Mn_{0.1}Co_{0.1}O₂.

6. The method of any one of claims 1 to 5, wherein the cathode layer has a thickness between 10 nanometer to 100 micrometer, preferably between 0.1 to 10 micrometer.

7. Method of manufacturing a thin-film arrangement for a thin-film solid state battery, the method comprising:
depositing a lithium-containing electrolyte material on a substrate or on a cathode layer using a direct current, DC, sputtering process to form an electrolyte layer; and
depositing an electrically conductive material on the electrolyte layer using the DC sputtering process to form an electrically conductive layer.

8. The method of claim 7, wherein the lithium-containing electrolyte material comprises a lithium oxide; and/or wherein the electrically conductive material comprises at least one of copper, silver, titanium or carbon.

9. The method of anyone of claims 7 or 8, wherein the lithium containing electrolyte layer has a thickness between 0.1 micrometer and 5 micrometer, preferably between 0.5 micrometer and 2 micrometer.

10. The method of anyone of claims 7 to 9, wherein the electrically conductive layer has a thickness between 0.01 micrometer and 10 micrometer, preferably between 0.1 micrometer and 1 micrometer.

11. Method of manufacturing a thin-film solid state battery, the method comprising:
(a) providing a substrate; and providing a first battery cell thereon by
(b) depositing a lithium-enriched cathode material using a direct current, DC, sputtering process to provide a cathode layer;
(c) depositing a lithium-containing electrolyte layer on the cathode layer using the DC sputtering process; and
(d) depositing an electrically conductive layer on the electrolyte layer using the DC sputtering process.

12. The method of claim 11, wherein steps (b) to (d) are repeated on the first battery cell, such as to stack multiple battery cells on one another using DC sputtering.

13. The method of any one of claims 1 to 12, further comprising crystallizing the cathode layer by targeted annealing using a flash lamp.

14. Thin-film solid state battery manufacturable by the method according to anyone of claims 11 or 12.

15. The thin-film solid state battery according to claim 14, wherein the cathode layer comprises a crystal structure having a (101) orientation.
